# EUROPÄISCHE PATENTSCHRIFT

(11) **EP 1 249 373 B1**
(45) Veröffentlichungstag und Bekanntmachung des Hinweises auf die Patenterteilung: **13.10.2004**
(21) Anmeldenummer: 02004813.8
(22) Anmeldetag: 02.03.2002
(51) Int. Cl.: B60R 21/20, B62D 1/16

(54) **Lenksäule für Kraftfahrzeuge**
Steering column for motor vehicles
Colonne de direction pour véhicules automobiles

(30) Priorität: 10.04.2001 DE 10117827
(43) Veröffentlichungstag der Anmeldung: 16.10.2002
(73) Patentinhaber: Bayerische Motoren Werke Aktiengesellschaft, 80809 München (DE)
(72) Erfinder: Kugelmann, Gregor, 71069 Sindelfingen (DE); Faulstroh, Hans-Joachim, 86511 Schmiechen (DE); Eilers, Jan, 82343 Pöcking (DE)

(56) Entgegenhaltungen:
- DE-A- 19 829 237
- US-A- 4 989 895
- US-A- 5 351 977

## Beschreibung

Die Erfindung betrifft eine Lenksäulenanordnung der im Oberbegriff des Patentanspruchs 1 genannten und aus der DE 198 29 237 A1 bekannten Bauart.

Wenn ein mit einer derartigen Lenksäulenanordnung ausgerüstetes Kraftfahrzeug bei einem Unfall gegen ein Hindernis prallt, dann wird der Gasgenerator ausgelöst, um den Luftsack aufzublasen und den Fahrer vor einem harten Aufprall zu schützen. Der Aufblasvorgang des Luftsacks erfolgt überaus rasch, und er ist bereits abgeschlossen, wenn der Luftsack den Oberkörper des Fahrers abfängt. Damit der Oberkörper des Fahrers eine verzögerte Bewegung zum Lenkrad hin ausführen kann, ist es bekannt, Vorkehrungen zu treffen, die ein Entweichen des Treibgases aus dem Luftsack ermöglichen. Beispielsweise kann das Material des Luftsackes gasdurchlässig ausgebildet oder mit besonderen Ausblasöffnungen versehen sein. Das ausströmende heiße Treibgas kann demzufolge mit der Haut des Fahrers in Berührung kommen, was zu Verletzungen führen kann. Außerdem wird das Treibgas von den Insassen des Fahrzeugs eingeatmet.

Der Erfindung liegt die Aufgabe zugrunde, die gattungsgemäße Lenksäulenanordnung für ein Kraftfahrzeug dahingehend weiterzubilden, dass das Treibgas zwar entweichen kann, nachdem der Luftsack aufgeblasen wurde und den Oberkörper des Fahrers abstützt, dass aber eine Gefährdung des Fahrers durch das heiße und möglicherweise gesundheitsschädliche Treibgas ausgeschlossen ist.

Die Lösung dieser Aufgabe ist im Patentanspruch 1 angegeben.

Nachdem der Luftsack durch Auslösen des Gasgenerators aufgeblasen wurde, wird das Treibgas unter der vom Oberkörper des Fahrers auf den Luftsack ausgeübten Kraft verdrängt und aus den im Luftsackgehäuse angeordneten Ausblasöffnungen ausgestoßen, so dass der Oberkörper eine verzögerte Bewegung zum Lenkradskelett hin ausführen kann. Da diese Ausblasöffnungen in einen vom Fahrgastraum abgeschotteten Bereich münden, sind die Fahrzeuginsassen vor dem heißen und möglicherweise gesundheitsschädlichen Gas zuverlässig geschützt.

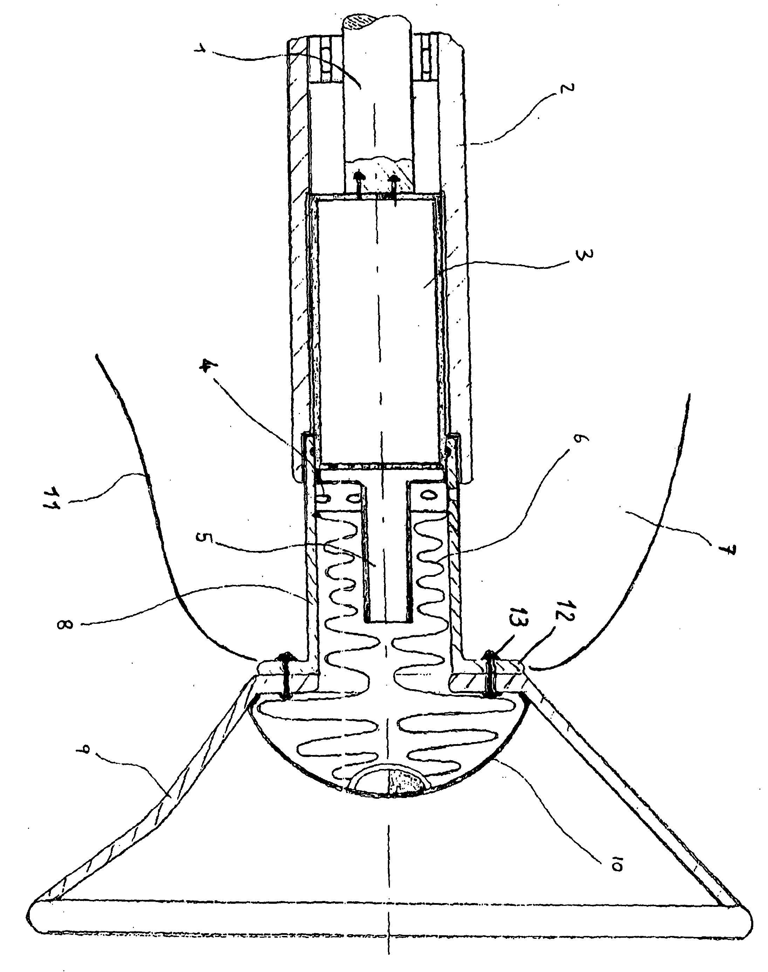

Ein bevorzugtes Ausführungsbeispiel der Erfindung ist in der Zeichnung dargestellt und wird nachfolgend näher erläutert.

Die einzige Figur der Zeichnung zeigt einen Längsschnitt durch eine Lenksäule für ein Kraftfahrzeug. Von einer Lenkspindel 1 ist nur der obere Endbereich gezeigt. Die Lenkspindel 1 ist mit (nicht gezeigten) Lagern in einem Mantelrohr 2 drehbar gelagert, das seinerseits mit dem Fahrzeugrahmen fest verbunden ist. In dem Mantelrohr 2 ist ein zylindrisches Gasgeneratorgehäuse 3 drehbar gelagert, das über einen Bajonettverschluß mit der Lenkspindel 1 drehfest verbunden ist. Das Gasgeneratorgehäuse 3 enthält eine pyrotechnische Treibladung und einen elektrischen Zünder. Der von der Lenkspindel 1 abgekehrte Boden des Gasgeneratorgehäuses 3 ist mit mehreren Gasaustrittsöffnungen versehen. An dieses Ende des Gasgeneratorgehäuses 3 schließt sich ein verjüngtes Gasstromführungsrohr 5 an.

Das Gasgeneratorgehäuse 3 ist in ein hülsenförmiges Luftsackgehäuse 8 eingepreßt, so daß es mit diesem drehfest verbunden ist. Das Gasstromführungsrohr 5 kann ebenfalls in das Luftsackgehäuse 8 eingepreßt sein. Es könnte aber auch an dem Gasgeneratorgehäuse 3 befestigt sein. Der mit dem Gasgeneratorgehäuse 3 verbundene Endbereich des Luftsackgehäuses 8 greift in eine erweiterte Bohrung des Mantelrohrs 2 ein. Das Luftsackgehäuse 8 ist in seinem dem Mantelrohr 2 benachbarten Endbereich am Umfang mit mehreren Ausblasöffnungen 4 versehen. In dem Luftsackgehäuse 8 ist ein zusammengefalteter Luftsack 6 angeordnet, in den das Gasstromführungsrohr 5 hineinragt. Das Luftsackgehäuse 8 ist am freien Ende mit einem Ringflansch 12 versehen. Ein Lenkradskelett 9 ist mit Befestigungselementen 13 mit dem Ringflansch 12 drehfest verbunden. In die Nabe des Lenkradskeletts 9 ist eine Abdeckung 10 lösbar eingesetzt. Die Abdeckung 10 kann beispielsweise durch einen Klemmverschluß mit dem Lenkradskelett 9 verbunden sein.

Das Lenkradskelett 9 ist von dem die Lenksäule aufnehmenden Raum durch ein schematisch dargestelltes Verkleidungsoberteil 7 und ein Verkleidungsunterteil 11 getrennt. Die Lenkspindel 1 und das Gasgeneratorgehäuse 3 sind mit (nicht gezeigten) elektrischen Steckkontakten zur Verbindung mit einer Steuereinheit versehen.

Zur Montage wird die aus Gasgeneratorgehäuse 3 und dem den gefalteten Luftsack 6 aufnehmenden Luftsackgehäuse 8 bestehende vorgefertigte Baueinheit mittels der Befestigungselemente 13 mit dem Lenkradskelett 9 verbunden. Sodann wird diese Baugruppe in das Mantelrohr 2 eingesetzt, und das Gasgeneratorgehäuse 3 wird über den Bajonettverschluß mit der Lenkspindel 1 drehfest verbunden. Es ist erkennbar, daß ein auf das Lenkradskelett 9 ausgeübtes Drehmoment über das Luftsackgehäuse 8 und das Gasgeneratorgehäuse 3 auf die Lenkspindel 1 übertragen wird.

Wenn bei einem Unfall der in dem Gasgeneratorgehäuse 3 enthaltene Zünder von der (nicht gezeigten) Steuereinheit ausgelöst und dadurch die pyrotechnische Treibladung gezündet wird, dann kann das entstehende Treibgas durch den perforierten Boden des Gasgeneratorgehäuses 3 und über das Gasstromführungsrohr 5 in den Luftsack 6 einströmen. Unter dem von dem Luftsack 6 ausgeübten Druck wird die Abdeckung 10 vom Lenkradskelett 9 abgesprengt, und der Luftsack kann sich in den Innenraum des Fahrzeugs entfalten. Der Aufblasvorgang des Luftsacks erfolgt überaus rasch und ist bereits abgeschlossen, wenn der Fahrer auf den Luftsack aufprallt. Unter der vom Oberkörper des Fahrers ausgeübten Kraft wird das in dem Luftsack 6 befindliche Treibgas verdrängt und aus den Ausblasöffnungen 4 ausgestoßen, so daß der Oberkörper eine verzögerte Bewegung zum Lenkradskelett 9 hin ausführen kann. Die Fahrzeuginsassen sind durch das Verkleidungsoberteil 7 und das Verkleidungsunterteil 11 vor dem aus den Ausblasöffnungen 4 austretenden heißen und möglicherweise gesundheitsgefährdenden Treibgas geschützt.

Falls der Fahrer auf einen Randbereich des Lenkradskeletts 9 aufprallen sollten, weil der aufgeblasene Luftsack einseitig ausweicht, was bei einer steilen Lenksäule grundsätzlich möglich ist, dann kann sich das Lenkradskelett verformen, um Energie aufzuzehren. Es kann daher auch bei einem Fahrzeug mit steiler Lenksäule eine Verletzungsgefahr des Fahrers beträchtlich verringert werden.

Für den Fachmann ist erkennbar, daß das gezeigte Ausführungsbeispiel in der Weise abgewandelt werden kann, daß das Gasgeneratorgehäuse 3 als deformierbares Crashelement genutzt werden kann.

### Bezugszeichenliste:

- 1: Lenkspindel
- 2: Mantelrohr
- 3: Gasgeneratorgehäuse
- 4: Ausblasöffnung
- 5: Gasstromführungsrohr
- 6: Luftsack
- 7: Verkleidungsoberteil
- 8: Luftsackgehäuse
- 9: Lenkradskelett
- 10: Abdeckung
- 11: Verkleidungsunterteil
- 12: Ringflansch
- 13: Befestigungselemente

## Patentansprüche

1. Lenksäulenanordnung für Kraftfahrzeuge, umfassend ein mit dem Fahrzeugrahmen fest verbundenes Mantelrohr (2), eine in dem Mantelrohr drehbar gelagerte Lenkspindel (1), ein mit der Lenkspindel drehfest verbundenes Lenkradskelett (9), eine Verkleidung (7, 11) die das Lenkradskelett von dem die Lenksäule aufnehmenden Raum trennt, und ein Airbagmodul mit einem Luftsack (6), einem Gasgenerator, einem Luftsackgehäuse (8), einem Gasgeneratorgehäuse (3) und einer absprengbaren Abdeckung (10), wobei das Gasgeneratorgehäuse (3) zylindrisch ausgebildet und in dem Mantelrohr (2) drehbar gelagert ist, wobei das Gasgeneratorgehäuse (3) und das Luftsackgehäuse (8) hintereinanderliegend koaxial angeordnet und axialund drehfest miteinander verbunden sind, wobei das Gasgeneratorgehäuse (3) eine in den Luftsack (6) mündende Gasaustrittsöffnung (5) aufweist, und wobei das freie Ende des Gasgeneratorgehäuses (3) mit der Lenkspindel (1) und das freie Ende des Luftsackgehäuses (8) mit dem Lenkradskelett (9) drehfest verbindbar ist, **dadurch gekennzeichnet, dass** mit dem Gasgeneratorgehäuse (3) ein in das Luftsackgehäuse (8) hineinragendes Gasstromführungsrohr (5) verbunden ist, und dass das Luftsackgehäuse (8) an seinem dem Mantelrohr (2) zugekehrten vorderen Ende mehrere Ausblasöffnungen (4) aufweist, über die der Luftsack (6) mit dem die Lenksäule aufnehmenden Raum in Verbindung steht.

2. Lenksäulenanordnung nach Anspruch 1, **dadurch gekennzeichnet, dass** das Luftsackgehäuse (8) zylindrisch ausgebildet und mit seinem vorderen Endbereich in dem Mantelrohr (2) drehbar gelagert ist, und dass die Ausblasöffnungen (4) hinter dem Mantelrohr (2) in dem Luftsackgehäuse (8) radial angeordnet sind.

## Claims

1. A steering-column arrangement for motor vehicles, comprising an outer column (2) firmly connected to the vehicle frame, a steering-wheel shaft (1) mounted for rotation in the outer column, a steering-wheel skeleton (3) co-rotatably connected to the steering-wheel shaft, a casing (7, 11) separating the steering-wheel skeleton from the space receiving the steering column, and an airbag module comprising an airbag (6), a gas generator, an airbag casing (8), a gas-generator casing (3) and an ejectable cover (10), wherein the gas-generator casing (3) is cylindrical and mounted for rotation in the outer column (2), wherein the gas-generator casing (3) and the airbag casing (8) are disposed coaxially one behind the other and are coaxially and co-rotatably connected, wherein the gas-generator casing (3) has a gas outlet opening (5) into the airbag (6) and wherein the free end of the gas-generator casing (3) is co-rotatably connectable to the steering-wheel shaft (1) and the free end of the airbag casing (8) is co-rotatably connectable to the steering-wheel skeleton (9), **characterised in that** the gas-generator casing (3) is connected to a gas flow guide tube (5) projecting into the airbag casing (8) and the airbag casing (8), at its front end facing the outer column (2), is formed with a number of outlet openings (4) connecting the airbag (6) to the space receiving the steering column.

2. A steering-column arrangement according to claim 1, **characterised in that** the airbag casing (8) is cylindrical and its front end region is mounted for rotation in the outer column (2), and the outlet openings (4) are disposed radially in the airbag casing (8) behind the outer column (2).

## Revendications

1. Arrangement de colonne de direction pour véhicules automobiles, comportant un tube de protection (2) lié à demeure au châssis du véhicule, un arbre de direction (1) monté de façon à pouvoir tourner dans le tube de protection, un squelette de volant (3) lié solidairement à l'arbre de direction, un revêtement (7, 11) séparant le squelette de volant de l'espace qui reçoit la colonne de direction et un module de coussin gonflable muni d'un coussin gonflable (6), d'un générateur de gaz, d'un boîtier de coussin gonflable (8), d'un boîtier de générateur de gaz (3) et d'un recouvrement (10) qui peut sauter, le boîtier de générateur de gaz (3) ayant une forme cylindrique et étant monté de façon à pouvoir tourner dans le tube de protection (2), le boîtier de générateur de gaz (3) et le boîtier de coussin gonflable (8) étant disposés coaxialement l'un derrière l'autre et reliés l'un à l'autre axialement et solidairement, le boîtier de générateur de gaz (3) présentant une ouverture de sortie de gaz (5) qui débouche dans le coussin gonflable (6) alors que l'extrémité libre du boîtier de générateur de gaz (3) est reliée solidairement à l'arbre de direction (1) et l'extrémité libre du boîtier de coussin gonflable (8) au squelette de volant (9),
**caractérisé en ce qu'**
un tube conducteur de flux gazeux (5) qui dépasse dans le boîtier de coussin gonflable (8) est relié au boîtier de générateur de gaz (3) et, à son extrémité avant orientée vers le tube de protection (2), le boîtier de coussin gonflable (8) présente plusieurs ouvertures de sortie (4) reliant le coussin gonflable (6) avec l'espace qui reçoit la colonne de direction.

2. Arrangement de colonne de direction selon la revendication 1,
**caractérisé en ce que**
le boîtier de coussin gonflable (8) a une forme cylindrique et est monté de façon à pouvoir tourner par sa zone terminale avant dans le tube de protection (2), et les ouvertures de sortie (4) sont disposées radialement dans le boîtier de coussin gonflable (8) derrière le tube de protection (2).
